**Europäisches Patentamt**

**European Patent Office**

**Office européen des brevets**

(19)

(11) Numéro de publication: **0 232 349**
**B1**

(12) # FASCICULE DE BREVET EUROPEEN

(45) Date de publication du fascicule du brevet:
**03.05.89**

(51) Int. Cl.⁴: **B 64 G 1/40**

(21) Numéro de dépôt: **86904838.9**

(22) Date de dépôt: **31.07.86**

(86) Numéro de dépôt international:
**PCT/FR 86/00270**

(87) Numéro de publication internationale:
**WO 87/00816 (12.02.87 Gazette 87/4)**

(54) **SYSTEME PROPULSIF BI-LIQUIDE D'UN SATELLITE ARTIFICIEL ET UTILISATION DUDIT SYSTEME POUR ASSURER L'EJECTION DU SATELLITE.**

(30) Priorité: **05.08.85 FR 8511964**

(43) Date de publication de la demande:
**19.08.87 Bulletin 87/34**

(45) Mention de la délivrance du brevet:
**03.05.89 Bulletin 89/18**

(84) Etats contractants désignés:
**DE GB**

(56) Documents cités:
**EP-A- 0 113 622**
**GB-A- 2 051 246**
**US-A- 3 910 037**

(73) Titulaire: **BARKATS, Gérard, Lotissement Persépolis, Domaine de Candéou F-06350 Peymeinade (FR)**

(72) Inventeur: **BARKATS, Gérard, Lotissement Persépolis, Domaine de Candéou F-06350 Peymeinade (FR)**

## Description

La présente invention concerne un système propulsif bi-liquide d'un satellite artificiel, en particulier d'un satellite géosynchrone, destiné à fournir une information prévisionnelle relative à la fin de vie normale du satellite et à permettre l'extraction de ce dernier de son orbite opérationnelle. L'invention concerne également l'utilisation d'un tel système propulsif bi-liquide en vue de prévoir l'instant où les ergols embarqués viennent à s'épuiser, correspondant à la fin de vie normale du satellite, tout en ménageant une réserve d'ergols suffisante pour assurer la manœuvre d'éjection du satellite de son orbite des satellites géostationnaires vers une orbite non opérationnelle.

Il convient tout d'abord de rappeler que les satellites de communication sont placés sur une orbite dans le plan de l'équateur terrestre à 36 000 km environ de la terre. Cette orbite est circulaire et possède la particularité que tout objet satellisé sur cette orbite aura une période de rotation de 24 heures autour de la terre.

De ce fait, l'objet ainsi satellisé paraît immobile au-dessus de la terre pour un observateur terrestre. Les satellites de communication utilisent cette orbite privilégiée, car elle leur permet, mieux que toutes autres, de remplir leur fonction de relais de communication entre plusieurs points situés sur la terre.

Cependant, la croissance de ce mode de communication et le développement prévisible pour le futur ont conduit les nations à s'organiser et à réglementer l'usage de cette orbite.

L'utilisateur se verra ainsi imposer, d'une part, de positionner son satellite à une longitude donnée et de n'en point bouger avec une précision déterminée et, d'autre part, sur cette postion orbitale, il ne lui sera autorisé d'utiliser que des gammes de fréquences radioélectriques bien déterminées.

Le but de cette réglementation est bien sûr l'équipartition des avantages de cette orbite et aussi d'éviter que les utilisateurs se gênent mutuellement en créant des interférences entre les différentes émissions.

Néanmoins, malgré l'évolution des techniques de communication qui ont permis au cours des ans de mettre plus de satellites par portion déterminée d'orbite des satellites géostationnaires et de transmettre de plus en plus d'informations dans les gammes de fréquences allouées, une pénurie se profile à court terme. En effet, les utilisateurs sont en nombre croissant pour les prévisions des décennies à venir et au surplus, l'attrait économique de ce mode de transmission combiné à l'évolution des besoins de communication conduisent à prédire que l'usage de ladite orbite sera bientôt saturé.

On a déjà fait appel à de nouvelles techniques qui, par augmentation des gammes de fréquences de transmission, permettent de transmettre plus d'informations. Les techniques d'émission et de réception par le biais de nouveaux types d'antennes permettent aussi de réduire la portion d'arc d'orbite allouée à chaque satellite.

Ainsi, l'utilisateur, à qui est allouée une portion d'orbite de plus en plus réduite, désire bien naturellement en faire le meilleur usage, c'est-à-dire ne conserver sur cette portion que des satellites qui sont efficaces au système de trafic de communication qu'il exploite. Il opère donc régulièrement le remplacement d'un satellite devenu obsolescent au fil des ans, par un nouveau satellite doté d'une espérance de vie plus grande.

Pour ce faire, d'une part, il y a lieu de renvoyer le satellite obsolescent sur une orbite où il ne risque pas de gêner le nouveau satellite, ni ceux environnants, mais d'autre part il ne faut éjecter le satellite obsolescent que lorsqu'on est sûr de son obsolescence afin d'optimiser la rentabilité du système mis en place.

On rappellera également ci-après les principaux modes d'obsolescence des satellites actuels qui, une fois mis sur leur position orbitale, sont déclarés inutilisables si l'un au moins des phénomènes suivants survient:

1. Un ou plusieurs équipements vitaux tombent en panne, et ne sont pas réparables ou ne peuvent être remplacés par commutation sur un équipement redondant.

2. La source d'énergie électrique par conversion photovoltaïque se dégrade au cours des ans et ne permet plus le fonctionnement des équipements du satellite.

3. Les ergols embarqués qui permettent au satellite de conserver sa position allouée sur l'orbite et aussi de se pointer correctement vers la terre, viennent à s'épuiser.

Sans moyen de commande, le satellite est alors soumis aux seules forces perturbatrices environnantes et va accomplir des mouvements cycliques autour de sa position orbitale, d'amplitude toujours croissante. L'absence d'intervention en vue d'éviter l'obsolescence est néfaste à deux égards. En abandonnant de tels satellites sur leur orbite, cette dernière sera rapidement encombrée et il deviendra de plus en plus difficile de remplacer un satellite obsolète par un autre de la même famille, afin de continuer la mission. De surcroît, un tel abandon sera rapidement interdit par des réglementations internationales, lorsque l'amplitude des mouvements orbitaux de ce satellite risquera de le faire pénétrer dans l'espace orbital de ses voisins immédiats.

En général, les satellites et leurs équipements sont bien connus de leurs réalisateurs et la fin de vie prématurée par panne accidentelle des équipements, alors que le satellite dispose d'une source d'énergie et de réserve d'ergols importantes, est très rare. Par ailleurs, des redondances d'équipement sont prévues pour réduire ce type de fin de vie prématurée.

Lorsque ce type de panne survient néanmoins, les réserves d'ergols sont généralement suffisantes pour permettre, sans grandes difficultés, l'éjection du satellite de son orbite.

Les sources d'énergie par conversion photovoltaïque sont conçues aussi pour que la décroissance d'énergie fournie soit lente au cours des ans et, sauf accident, par exemple un court-circuit intempestif, cette cause ne sera pas celle qui provoquera l'inutilisation totale du satellite.

La cause la plus fréquente qui provoque la fin de vie du satellite est donc la consommation de la totalité des ergols qui permettent le maintien à poste du satellite et son pointage vers la terre.

Les satellites modernes utilisent des systèmes de propulsion bi-liquide avec des réservoirs de carburant et de comburant séparés. Ce système de propulsion est utilisé par souci de rentabilité tout au long de la vie du satellite pour atteindre les différents objectifs suivants:

### 1. Circulation de l'orbite et positionnement orbital en début de vie

Une partie importante de la masse d'ergols embarqués (quantité dont la masse est de l'ordre de grandeur de la masse du satellite sec) est brûlée dans une tuyère dite «d'apogée» et dont le but est d'augmenter de façon adéquate le vecteur vitesse du satellite pour le faire passer d'une orbite elliptique allongée dite «de transfert» (périgée égale à quelques centaines de km et apogée aux environs de 36 000 km) à une orbite circulaire à 36 000 km d'altitude. L'incrément de vitesse nécessaire à cette opération est compris entre 1500 m/s et 1850 m/s suivant le lanceur utilisé.

### 2. Commande d'orbite

Une fois mis à poste sur sa position orbitale, le satellite est soumis à des forces perturbatrices (attraction luni-solaire, pression de radiation solaire, etc.) qui ont tendance à lui faire décrire des mouvements cycliques d'amplitude croissante autour de la position initiale.

Les stations au sol étant pointées vers un point fixe dans le ciel, afin d'éviter le suréquipement des stations au sol avec des dispositifs suiveurs du satellite, il faut périodioquement intervenir pour s'opposer aux mouvements perturbateurs du satellite. Cela est obtenu en annulant la modulation du vecteur vitesse du satellite, causée par les perturbations, en brûlant périodiquement une quantité d'ergols dans des tuyères de commande d'orbite.

### 3. Commande d'orientation

De la même façon, le satellite est soumis autour de son centre de gravité à des couples perturbateurs qui conduiraient à le dépointer.

Une quantité d'ergols est donc périodiquement brûlée dans des tuyères de commande d'orientation.

Les systèmes classiques de propulsion à biergol contenaient généralement deux réservoirs sphériques d'ergols de même diamètre. Les réservoirs étant en général d'équivolume. La masse embarquée de carburant sera donc différente à volume égal de celle du comburant, puisque leur densité est différente. Les trous d'injection des tuyères sont calibrés pour respecter une consommation équivolume des deux ergols.

Compte tenu des inconvénients de vitesse à donner au satellite, la masse totale d'ergols embarquée est en général du même ordre de grandeur que la masse sèche du satellite.

Pour des satellites de masse de plus en plus importante les ergols deviennent difficilement embarquables à bord de deux seuls réservoirs. Le nombre de réservoirs est donc augmenté pour permettre d'emporter plus d'ergols. C'est ainsi qu'on a par exemple équipé certains satellites de quatre réservoirs identiques, deux pour les comburants et deux pour les carburants.

Lorsque l'un de ces deux systèmes présentés, où les volumes de carburant et de comburant embarqués sont initialement identiques, arrivent en fin de vie, du fait des dispersions dans les alésages des trous d'injection et dans les débits des valves, l'un des deux ergols s'épuisera légèrement avant l'autre.

A ce moment, le réservoir vidé expulsera non plus l'ergol attendu mais le reste de gaz de pressurisation en même temps que l'autre ergol. La réaction chimique attendue ne se faisant plus, l'impulsion spécifique diminue notablement ainsi que la poussée obtenue. Le satellite ne répondra donc pas à la manœuvre sollicitée et deviendra rapidement incontrôlable.

Au sol l'utilisateur en est informé par une réponse du satellite non conforme à la prévision, mais à ce moment il ne peut plus éjecter le satellite de son orbite par manque d'un des deux ergols, à moins de disposer d'une réserve propulsive additionnelle commandable du sol.

Une telle manœuvre sera possible grâce à un système redondant de stockage de bi-liquide de moindre quantité (l'incrément de vitesse requis est de quelques mètres/seconde), ou à un système propulsif à poudre indépendant. De tels systèmes, outre le doublement des commandes électriques nécesaires, présentent l'inconvénient d'être des systèmes qui seront restés en attente pendant toute la vie du satellite et qui ne seront réactivés qu'au bout de plusieurs années. Leur fiabilité de fonctionnement est aléatoire et certainement moindre que celle du système qui a été régulièrement et continûment utilisé au cours de la vie du satellite.

Ainsi, pour pouvoir utiliser le même système, il faut pouvoir prévoir avec sûreté la fin de la consommation des ergols, de façon à déclencher l'opération d'éjection de l'orbite. Si le système de connaissance n'est pas précis, on perd d'autant plus de temps d'utilisation et de commercialisation du satellite que ce moyen est imprécis.

La présence d'ergols en apesanteur à l'intérieur des réservoirs rend tout moyen de mesure de la quantité résiduelle d'ergols très imprécis, et à ce jour aucun moyen satisfaisant n'a pu permettre d'utiliser d'une façon sûre tous les ergols embarqués et de n'éjecter le satellite qu'au dernier moment.

Le compromis est donc très délicat à mettre en œuvre: éjecter prématurément le satellite de son orbite et donc perdre une période de commercialisation rentable, ou bien exploiter à fond le satellite jusqu'au dernier moment et donc risquer de ne plus pouvoir l'éjecter de sa position orbitale.

La présente invention a précisément eu pour but de mettre au point un système propulsif à deux ergols qui permettent de résoudre les problèmes précités.

Par rapport au document EP-A-0 113 622 qui décrit déjà un système propulsif à deux ergols d'un satellite artificiel, en particulier d'un satellite géosynchrone, destiné à fournir une information prévisionnelle relative à la fin de vie normale du satellite et à assurer l'extraction dudit satellite de son orbite opérationnelle, du type comportant une unité de pressurisation d'ergols contenus dans des réservoirs d'alimentation d'une tuyère d'apogée et d'une pluralité de tuyères de faible poussée de commande d'orientation et d'orbite du satellite, l'alimentation des différentes tuyères en ergols s'effectuant par l'intermédiaire d'électrovannes, l'invention est caractérisée en ce que la réserve d'ergols est répartie inégalement dans au moins deux couples de réservoirs associés, chaque couple comprenant un réservoir de comburant et un réservoir de carburant, en ce qu'un premier couple de réservoirs contient un excédent du premier ergol par rapport au volume du second ergol contenu dans le réservoir associé, alors qu'un second couple de réservoirs contient un excédent du second ergol par rapport au volume du premier ergol contenu dans le réservoir associé, et en ce que les réservoirs associés des différents couples sont aptes à être mis en service successivement pendant une période déterminée durant la vie normale du satellite de telle sorte que la détection de l'épuisement d'un premier ergol dans un réservoir associé à un réservoir contenant un excès du second ergol indique que la durée de vie normale résiduelle du satellite est au plus approximativement égale à ladite période déterminée des mises en service successives des différents couples de réservoirs, et qu'après épuisement du second ergol du réservoir associé au réservoir contenant un excès du premier ergol, les deux réservoirs appartenant à des couples différents et contenant chacun un ergol en excès sont associés par commande appropriée des électrovannes pour alimenter les tuyères de faible poussée en vue de fournir au satellite l'impulsion nécessaire à son extraction de l'orbite opérationnelle.

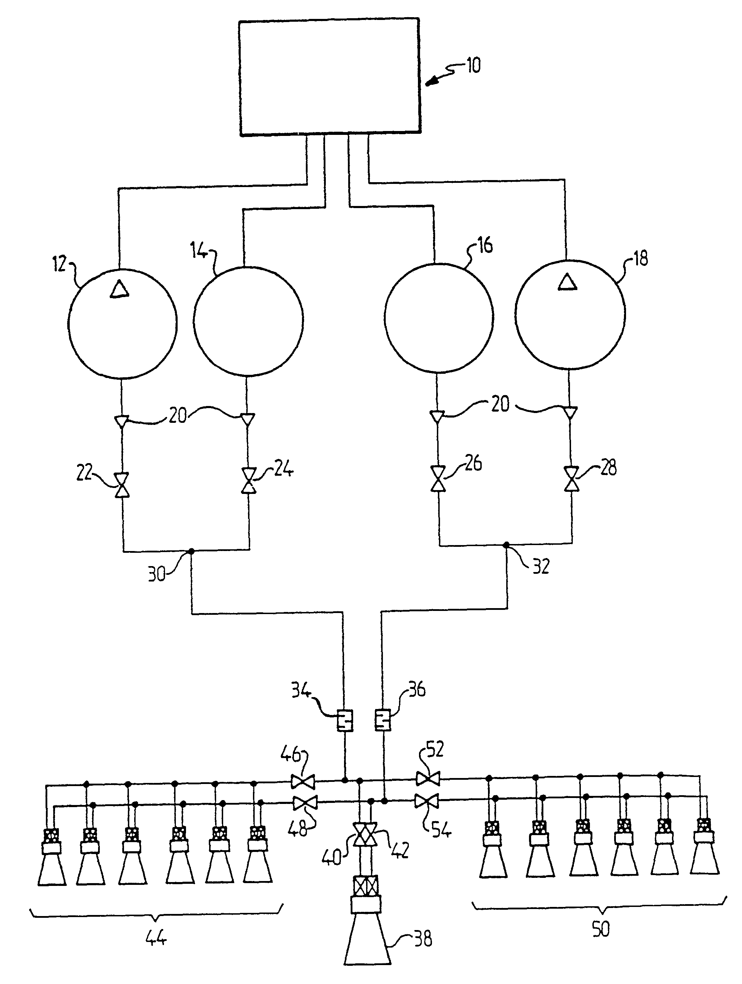

D'autres caractéristiques et avantages de l'objet de la présente invention apparaîtront à la lecture de la description détaillée faite notamment en regard du dessin annexé illustrant schématiquement un tel système de propulsion à deux ergols d'un satellite artificiel.

Le système propulsif selon l'invention comporte tout d'abord une unité de commande de pressurisation 10 des ergols. De façon classique, cette unité 10 incorpore un réservoir de gaz neutre sous pression, en particulier un réservoir d'hélium, des électrovannes, des valves anti-retour, des pressostats et des filtres, tous ces organes étant par conséquent montés en amont des différents réservoirs d'ergols 12, 14, 16 et 18.

Dans le mode de réalisation particulier illustré sur le dessin annexé, les réservoirs d'ergols sont au nombre de quatre. Les réservoirs 12, 14 contiennent le comburant, alors que les réservoirs 16, 18 contiennent le carburant. Conformément à la présente invention, un réservoir de comburant, par exemple le réservoir 12, et un réservoir de carburant, par exemple le réservoir 18, contiennent un excès d'ergols par rapport au volume du second ergol contenu dans le réservoir associé. Cet excédent est schématisé par la lettre Δ sur la figure annexée.

Les quatre réservoirs 12, 14, 16 et 18 sont couplés aux différentes tuyères par un circuit d'alimentation comportant, immédiatement en aval des réservoirs, une valve anti-retour 20 montée sur le circuit de sortie de chaque réservoir. En aval des différentes valves anti-retour 20, le circuit de sortie de chaque réservoir contient une électrovanne 22, 24, 26 et 28 respectivement associée aux réservoirs 12, 14, 16 et 18.

Tel que cela apparaît sur le dessin annexé, les circuits de sortie des réservoirs se rejoignent en 30 et 32 pour définir un circuit d'alimentation unique des différentes tuyères. En aval des points 30, 32, le circuit commun d'alimentation des tuyères comporte deux filtres 34, 36.

Le système propulsif selon l'invention comprend une tuyère d'apogée 38 couplée au circuit d'alimentation commun avec interposition d'électrovanne 40, 42. Le système comporte en outre un premier groupe de tuyères de faible poussée 44 destinées à assurer la commande d'orientation et d'orbite du satellite une fois mis en poste sur son orbite des satellites géosynchrones. Le circuit d'alimentation propre à ce premier groupe de tuyères 44 comprend deux électrovannes 46 et 48.

De façon classique, le système comprend en outre un second groupe de tuyères de faible poussée 50 dont le circuit d'alimentation comporte également deux électrovannes 52, 54. La présence de ce second groupe de tuyères redondantes de faible poussée est uniquement destinée à ce qu'il puisse être mis en service en cas de panne d'une ou plusieurs tuyères du premier groupe de tuyères 44.

Comme indiqué précédemment, les réservoirs 12, 18 contiennent un excédent d'ergols; cet excédent est déterminé de telle manière qu'il corresponde à un volume au moins égal au volume des ergols nécessaires pour éjecter le satellite en deux fois 12 heures et pour le contrôler au cours des opérations d'éjection. Il est avantageux de ménager une marge de sécurité et donc de choisir le volume des ergols en excès, légèrement supérieure au volume nécessaire à une telle éjection du satellite.

Au cours de la phase initiale de mise en orbite du satellite, l'alimentation des ergols est effectuée simultanément à partir de tous les réservoirs 12, 14, 16 et 18. Pour ce faire, les électrovannes 22, 24, 26 et 28 ainsi que les électrovannes 40, 42 sont ouvertes, ce qui permet l'entrée en action de la tuyère d'apogée 38. Bien entendu, au cours de cette phase, les électrovannes 46, 48, 52 et 54 sont en revanche fermées. Au cours de cette phase initiale de mise en orbite, une quantité égale d'ergols se trouve ainsi prélevée dans chacun des réservoirs. Il en résulte donc que les excédents de volume d'ergols des réservoirs 12 et 18 par rapport aux réservoirs 14 et 16 restent inchangés. Une fois le satellite mis à poste, les vannes 40 et 41 sont fermées et la tuyère d'apogée se trouve ainsi isolée.

A partir de ce moment, c'est-à-dire au cours de la vie normale du satellite, l'alimentation en ergols des tuyères de commande d'orientation et d'orbite 44 et 50 est obtenue par commande appropriée des électrovannes 22, 24, 26, 28, 46, 48, 52 et 54, de façon à puiser les ergols successivement et avec une période déterminée dans les différents couples de réservoirs associés. On combinera par exemple alternativement le réservoir 12 contenant un excès de comburant avec le réservoir 16 ne contenant pas d'excès de carburant. Pour ce faire, les vannes 22 et 26 seront ouvertes, alors que les vannes 24 et 28 seront fermées, pendant la période déterminée qui pourra par exemple être avantageusement choisie de l'ordre d'environ 6 mois.

A la fin de cette période, les vannes 22 et 26 seront fermées alors que les vannes 24 et 28 seront ouvertes, ce qui permettra de combiner le réservoir 14 ne contenant pas d'excès de comburant avec le réservoir 18 contenant un excès de carburant.

Si le système propulsif selon l'invention comprend, outre les deux couples de réservoir inégalement remplis, au moins un autre couple supplémentaire de réservoirs également rempli, ces derniers seront utilisés en priorité. Il est donc nécessaire de prévoir des moyens d'identification des couples de réservoirs inégalement remplis et/ou des couples de réservoirs également remplis.

En agissant de la sorte, au voisinage de la fin de vie du satellite, il arrivera un moment où l'on détectera l'épuisement du premier ergol dans le premier couple de réservoirs inégalement remplis. On obtient ainsi une information sur la durée de vie normale résiduelle du satellite. Cette durée de vie normale résiduelle du satellite est au plus approximativement égale à la période déterminée des mises en service successives des différents couples de réservoirs. Dans la pratique, on déterminera la période de branchement successif des différents couples de réservoirs inégalement remplis de façon que l'information recueillie corresponde à une durée la plus grande possible et, par conséquent, la plus proche possible de la période de commutation successive des différents couples de réservoirs. Dans la pratique, une telle période peut être prédéterminée sans difficulté en fonction de la prévision de la durée normale de vie du satellite ainsi que de la consommation approximativement estimée des différentes tuyères du système propulsif.

Dans la pratique, l'épuisement d'un des couples de réservoirs inégalement remplis peut être observé de différentes manières. L'épuisement d'un ergol peut par exemple être détecté lors de la modification de l'impulsion spécifique à laquelle se trouve soumis le satellite. Il est donc possible de détecter l'épuisement d'un ergol, par exemple par trajectographie.

Un certain nombre d'autres moyens peuvent également être mis à profit, tels que la mesure de la température des tuyères ou de la pression des chambres.

Une telle observation peut bien entendu être effectuée à partir de mesures faites au sol par radar, effet Doppler ou interférométrie.

La non-réalisation d'une fonction de commande d'orientation peut être détectée en outre à partir de la non-désaturation des roues de réaction ou cinétiques, ce qui s'observe à partir de la vitesse de rotation des roues. En outre, la non-réalisation de couples de correction prévus peut également être observée à partir d'indications de gyromètres intégrateurs ou non, ou d'observations des détecteurs de sources électromagnétiques (terre, soleil, étoiles).

Lorsque l'on a détecté l'épuisement du premier ergol dans le premier couple de réservoirs inégalement remplis, on commute les commandes des électrovannes de façon à puiser les ergols dans le second couple de réservoirs inégalement remplis. Après cette dernière période d'utilisation de ce second couple de réservoirs, on procède à la commutation des commandes des électrovannes de manière à associer les réservoirs appartenant à des couples différents et contenant chacun un ergol en excès. Dans le mode de réalisation décrit, on sera donc amené, en fin de vie normale du satellite, à obturer les vannes 24 et 26 et à ouvrir les vannes 22 et 28 pour alimenter les tuyères de faible poussée en vue de fournir au satellite l'impulsion nécessaire à son extraction de l'orbite des satellites géosynchrones vers une orbite non opérationnelle. Comme indiqué précédemment, l'excès de comburant et de carburant contenu respectivement dans les réservoirs 12 et 18 a été calculé de façon à être certain de mener à bien les opérations d'éjection qui s'effectuent au cours de deux demi-périodes de 12 heures chacune, et au cours desquelles il est encore nécessaire de contrôler la position du satellite.

**Revendications**

1. Système propulsif à deux ergols d'un satellite artificiel, en particulier d'un satellite géosynchrone, destiné à fournir une information prévisionnelle relative à la fin de vie normale du satellite et à assurer l'extraction dudit satellite de son orbite opérationnelle, du type comportant une unité (10) de pressurisation d'ergols contenus dans des réservoirs d'alimentation d'une tuyère d'apogée (38) et d'une pluralité de tuyères de faible poussée de commande d'orientation et d'orbite du satellite (44, 50), l'alimentation des différentes tuyères en ergols s'effectuant par l'intermédiaire d'électrovannes, caractérisé en ce que la réserve d'ergols est répartie inégalement dans au moins deux couples de réservoirs associés (12, 16 et 14, 18), chaque couple comprenant un réservoir de comburant et un réservoir de carburant, en ce qu'un premier couple de réservoirs (12, 16) contient un excédent du premier ergol par rapport au volume du second ergol contenu dans le réservoir associé (16), alors qu'un second couple de réservoirs (14, 18) contient un excédent du second ergol par rapport au volume du premier ergol contenu dans le réservoir (14) associé, et en ce que les réservoirs associés des différents couples sont aptes à être mis en service successivement pendant une période déterminée durant la vie normale du satellite de telle sorte que la détection de l'épuisement d'un premier ergol dans un réservoir (14 ou 16) associé à un réservoir (18 ou 12) contenant un excès du second ergol indique que la durée de vie normale résiduelle du satellite est au plus approximativement égale à ladite période déterminée des mises en service successives des différents couples de réservoirs, et qu'après épuisement du second ergol du réservoir (16 ou 14) associé au réservoir (12 ou 18) contenant un excès du premier ergol, les deux réservoirs (12 et 18) appartenant à des couples différents et contenant chacun un ergol en excès sont associés par commande appropriée des électrovannes pour alimenter les tuyères de faible poussée (44 ou 50) en vue de fournir au satellite l'impulsion nécessaire à son extraction de l'orbite opérationnelle.

2. Système propulsif selon la revendication 1, caractérisé en ce qu'il comprend deux couples de réservoirs inégalement remplis (12, 16 et 14, 18) et au moins un couple supplémentaire de réservoirs également remplis.

3. Système propulsif selon l'une des revendications 1 et 2, caractérisé en ce qu'il comporte des moyens d'identification des couples de réservoirs inégalement remplis (12, 16 et 14, 18) et/ou des couples de réservoirs également remplis, de façon à pouvoir commander les électrovannes correspondantes pour épuiser en priorité les ergols contenus dans les couples de réservoirs également remplis.

4. Système propulsif selon l'une des revendications 1 à 3, caractérisé en ce que les excédents d'ergols contenus dans les couples de réservoirs inégalement remplis (12, 16 et 14, 18) correspondent au moins au volume des ergols nécessaires pour éjecter le satellite en deux fois 12 heures et pour le contrôler au cours des opérations d'éjection.

5. Utilisation du système propulsif selon l'une des revendications 1 à 4, caractérisée en ce que l'on répartit inégalement les ergols dans au moins deux couples de réservoirs (12, 16 et 14, 18) associés de manière à disposer d'un supplément de carburant dans un premier couple de réservoirs et d'un supplément de comburant dans le second couple de réservoirs.

6. Utilisation selon la revendication 5, caractérisée en ce qu'au cours de la phase initiale de mise en orbite du satellite, l'alimentation des ergols est effectuée simultanément à partir de tous les réservoirs.

7. Utilisation selon l'une des revendications 5 et 6, caractérisée en ce qu'au cours de la vie normale du satellite, l'alimentation en ergols des tuyères de commande d'orientation et d'orbite (44, 50) est obtenue par commande appropriée des électrovannes de façon à puiser les ergols successivement et avec une période déterminée dans les différents couples de réservoirs associés.

8. Utilisation selon la revendication 7, caractérisée en ce que l'on commande les électrovannes de manière à épuiser en priorité les ergols contenus dans les couples de réservoirs également remplis et à terminer par une alimentation des ergols à partir des couples de réservoirs inégalement remplis.

9. Utilisation selon l'une des revendications 5 à 8, caractérisée en ce que, lorsque l'on détecte l'épuisement d'un premier ergol dans le premier couple de réservoirs inégalement remplis, ce qui fournit une information sur la durée de vie normale résiduelle du satellite, on commute les commandes des électrovannes de façon à puiser les ergols dans le second couple de réservoirs inégalement remplis.

10. Utilisation selon la revendication 9, caractérisée en ce qu'après épuisement du second ergol dans le second couple de réservoirs inégalement remplis, on commute les commandes des électrovannes de manière à associer les réservoirs appartenant à des couples différents et contenant chacun un ergol en excès pour alimenter les tuyères de faible poussée (44, 50) en vue de fournir au satellite l'impulsion nécessaire à son extraction de l'orbite opérationnelle.

## Patentansprüche

1. Antriebssystem mit zwei Treibstoffen eines künstlichen Satelliten, insbesondere eines geostationären Satelliten, das dazu bestimmt ist, eine Vorwarninformation über das Ende der normalen Lebensdauer des Satelliten abzugeben und sicherzustellen, dass der Satellit seine Betriebsumlaufbahn verlässt, enthaltend eine Einheit (10), um die Treibstoffe unter Druck zu setzen, die in den Tanks zur Versorgung einer Apogäumsdüse (38) und mehrerer Düsen (44, 50) schwachen Schubs zur Steuerung der Ausrichtung und der Umlaufbahn des Satelliten enthalten sind, wobei die Versorgung der verschiedenen Düsen mit Treibstoffen sich mittels Elektroventilen vollzieht, dadurch gekennzeichnet, dass die Treibstoffreserve ungleich in wenigstens zwei zugehörigen Tankpaaren (12, 16 und 14, 18) aufgeteilt ist, wobei jedes Paar einen Oxydationsmitteltank und einen Brennstofftank aufweist, dass ein erstes Tankpaar (12, 16) einen Überschuss des ersten Treibstoffs gegenüber dem Volumen des zweiten Treibstoffs enthält, der in dem zugehörigen Tank (16) enthalten ist, und ein zweites Tankpaar (14, 18) einen Überschuss des zweiten Treibstoffs gegenüber dem Volumen des in dem zugehörigen Tank (14) enthaltenen ersten Treibstoffs enthält, und dass die den verschiedenen Paaren zugehörigen Tanks dazu eingerichtet sind, während einer vorbestimmten Periode während der normalen Lebensdauer des Satelliten nacheinander verwendet zu werden, so dass die Ermittlung der Erschöpfung eines ersten Treibstoffs in einem Tank (14 oder 16) der einem Tank (18 oder 12) zugeordnet ist, der einen Überschuss des zweiten Treibstoffs enthält, angibt, dass der Rest der normalen Lebensdauer des Satelliten höchstens nahezu gleich der genannten vorbestimmten Periode der aufeinanderfolgenden Verwendungen der verschiedenen Tankpaare ist, und nach der Erschöpfung des zweiten Treibstoffs im Tank (16 oder 14) der dem Tank (12 oder 18) zugeordnet ist, der einen überschuss an erstem Treibstoff enthält, die zwei Tanks (12 und 18), die unterschiedlichen Paaren angehören und jeweils einen Treibstoffüberschuss enthalten, durch geeignete Steuerung der Elektroventile einander zugeordnet werden, um die Düsen (44 oder 50) schwachen Schubes zu versorgen, um den Satelliten den zum Verlassen seiner Betriebsumlaufbahn notwendigen Impuls zu geben.

2. Antriebssystem nach Anspruch 1, dadurch gekennzeichnet, dass es zwei Paare unterschiedlich gefüllter Tanks (12, 16 und 14, 18) und wenigstens ein zusätzliches Paar gleichgefüllter Tanks enthält.

3. Antriebssystem nach einem der Ansprüche 1 und 2, dadurch gekennzeichnet, dass es Identifikationseinrichtungen für Paare ungleich gefüllter Tanks (12, 16 und 14, 18) und/oder für Paare gleich gefüllter Tanks enthält, um die entsprechenden Elektroventile so steuern zu können, dass zunächst die Treibstoffe erschöpft werden, die in den Paaren gleich gefüllter Tanks enthalten sind.

4. Antriebssystem nach einem der Ansprüche 1 bis 3, dadurch gekennzeichnet, dass die Treibstoffüberschüsse, die in den Paaren ungleich gefüllter Tanks (12, 16 und 14, 18) enthalten sind, wenigstens dem Volumen der Treibstoffe entsprechen, die notwendig sind, um den Satelliten in zweimal 12 Stunden anzutreiben und ihn im Verlauf der Antriebsvorgänge zu steuern.

5. Verwendung des Antriebssystems nach einem der Ansprüche 1 bis 4, dadurch gekennzeichnet, dass man die Treibstoffe ungleich in wenigstens zwei Paare von Tanks (12, 16 und 14, 18) aufteilt, die so zugeordnet sind, dass ein Zuschlag an Brennstoff in einem ersten Tankpaar und ein Zuschlag an Oxydationsmittel in dem zweiten Tankpaar enthalten ist.

6. Verwendung nach Anspruch 5, dadurch gekennzeichnet, dass im Verlauf der Anfangsphase beim In-die-Umlaufbahn-Bringen des Satelliten die Zuführung der Brennstoffe simultan aus allen Tanks erfolgt.

7. Verwendung nach einem der Ansprüche 5 und 6, dadurch gekennzeichnet, dass im Verlauf der normalen Lebensdauer des Satelliten die Versorgung der Ausrichtungs- und Umlaufbahnsteuerdüsen (44, 50) mit Treibstoffen durch geeignete Steuerung von Elektroventilen erzielt wird, um die Treibstoffe in den verschiedenen Paaren zugeordneter Tanks aufeinanderfolgend und mit vorbestimmter Periode zu verbrauchen.

8. Verwendung nach Anspruch 7, dadurch gekennzeichnet, dass man die Elektroventile derart steuert, dass zunächst die in den Paaren gleich gefüllter Tanks enthaltenen Treibstoffe aufgebraucht werden und mit einer Verwendung der in den Paaren ungleich gefüllter Tanks enthaltenen Treibstoffe geendet wird.

9. Verwendung nach einem der Ansprüche 5 bis 8, dadurch gekennzeichnet, dass bei der Ermittlung des Aufbrauchs eines ersten Treibstoffs in dem ersten Paar ungleich gefüllter Tanks eine Information über die restliche normale Lebensdauer des Satelliten geliefert wird und die Steuerung der Elektroventile so umgeschaltet wird, dass die in dem zweiten Paar ungleich gefüllter Tanks enthaltenen Treibstoffe verbraucht werden.

10. Verwendung nach Anspruch 9, dadurch gekennzeichnet, dass nach Aufbrauch des zweiten Treibstoffs in dem zweiten Paar ungleich gefüllter Tanks die Steuerung der Elektroventile derart umgeschaltet wird, dass die Tanks, die den verschiedenen Paaren angehören und die jeweils einen Überschuss an Treibstoff enthalten, die Düsen (44, 50) schwachen Schubs versorgen, um den Satelliten den zum Verlassen seiner Betriebsumlaufbahn notwendigen Schub zu verleihen.

## Claims

1. Two-component propulsive system for an artificial satellite, in particular for a geostationary satellite, the system being intended to provide advance warning of the end of the normal lifetime of the satellite and to ensure that said satellite is extracted from its operating orbit, the system being of the type comprising a unit (10) for pressurizing propellant components contained in feed tanks of an apogee nozzle (38) and of a plurality of low-thrust nozzles (44, 50) for controlling the orientation and the orbit of the satellite, the various nozzles being fed with propellant components via electrically controlled valves, the system being characterized in that the propellant component supply is unequally distributed between at least two pairs of associated tanks (12, 16 and 14, 18), with each pair comprising an oxidizer tank and a fuel tank, in that a first pair of tanks (12, 16) contains an excess quantity of the first propellant component relative to the volume of the second propellant component contained in the associated tank (16), while a second pair of tanks (14, 18) contains an excess quantity of the second propellant component relative to the volume of the first propellant component contained in the associated tank (14), and in that the associated tanks of the different pairs are suitable for being put into service successively for a pre-determined period of time during the normal lifetime of the satellite so that detection that a first propellant component has been exhausted in a tank (14 or 16) associated with a tank (18 or 12) containing an excess of the second propellant component indicates that the length of the residual normal lifetime of the satellite is at most approximately equal to said predetermined period of the successive service times of the different pairs of tanks, and that after exhaustion of the second propellant component from the tank (16 or 14) associated with the tank (12 or 18) containing an excess quantity of the first propellant component, the two tanks (12 and 18) belonging to different pairs and each containing an excess quantity of one propellant component are associated by appropriate control of the electrically controlled valves in order to feed the low-thrust nozzles (44 or 50) in order to provide the satellite with the impulse necessary to extract it from the operating orbit.

2. Propulsive system according to claim 1, characterized in that it comprises two pairs of unequally filled tanks (12, 16 and 14, 18), and at least one additional pair of equally filled tanks.

3. Propulsive system according to either of claims 1 and 2, characterized in that it includes means for identifying the pairs of tanks which are unequally filled (12, 16 and 14, 18) and/or the pairs of tanks which are equally filled, so as to be able to control the corresponding electrically controlled valves to empty the propellant components contained in the equally filled pairs of tanks first.

4. Propulsive system according to one of claims 1 to 3, characterized in that the excess quantities of propellant components contained in the pairs of unequally filled tanks (12, 16 and 14, 18) correspond to not less than the volume of propellant component required to eject the satellite during two 12 hour periods and to control it during the ejection operation.

5. Utilization of the propulsive system according to one of claims 1 to 4, characterized in that the propellant components are unequally distributed in at least two pairs of assoiated tanks (12, 16 and 14, 18) in such a manner as to provide additional fuel in a first pair of tanks and additional oxidizer in the second pair of tanks.

6. Utilization according to claim 5, characterized in that during the initial period during which the satellite is put into orbit, the propellant components are supplied simultaneously from all of the tanks.

7. Utilization according to either of claims 5 and 6, characterized in that, during the normal lifetime of the satellite, the nozzles (44, 50) for controlling its orientation and orbit are fed with propellant components by suitably controlling the electrically controlled valves so as to draw the propellant components successively during a pre-determined period of time from the different pairs of associated tanks.

8. Utilization according to claim 7, characterized in that the electrically controlled valves are controlled in such a manner as to draw the propellant components from the pairs of tanks which are equally filled first and to terminate by feeding the propellant components from the pairs of thanks which are unequally filled.

9. Utilization according to one of claims 5 to 8, characterized in that when the exhaustion of a first propellant component is detected in the first pair of unequally filled tanks, thereby providing information on the duration of the residual normal lifetime of the satellite, the controls of the electrically controlled valves are switched over so as to draw the propellant components from the second pair of unequally filled tanks.

10. Utilization according to claim 9, characterized in that, after the second propellant component has been exhausted from the second pair of unequally filled tanks, the controls of the electrically controlled valves are switched over in such a manner as to associate the tanks belonging to different pairs and each containing an excess quantity of one of the propellant components in order to feed the low-thrust nozzles (44, 50) in order to provide the satellite with the impulse necessary to extract it from the operating orbit.